# EUROPÄISCHE PATENTANMELDUNG

(11) **EP 0 760 314 A1**
(43) Veröffentlichungstag der Anmeldung: **05.03.1997**
(21) Anmeldenummer: 96113621.5
(22) Anmeldetag: 26.08.1996
(51) Int. Cl.: B60R 21/13

(54) **Kupplung für ein in eine Wirkstellung verlagerbares Sicherheitsteil eines Fahrzeugs, insbesondere für einen Überrollbügel**

(30) Priorität: 28.08.1995 DE 19531599
(71) Anmelder: Bayerische Motoren Werke Aktiengesellschaft, 80788 München (DE)
(72) Erfinder: Banda, Ruth, 80933 München (DE)

(57) **Zusammenfassung**

Die Kupplung weist eine mit einem Überrollbügel verbindbare Haltestange (1) auf, an der Vorsprünge (5) zum Eingriff von am Fahrzeugaufbau schwenkbar gelagerten Halteklauen (4) vorgesehen sind. Die Halteklauen (4) sind über einen sensorgesteuerten Elektromagneten (2) aus der Verriegelungsstellung von den Vorsprüngen (5) weg in eine Freigabestellung schwenkbar.

Um eine besonders einfache aber trotzdem zuverlässige Bauart zu erhalten, sind die Halteklauen (4) unter der Wirkung einer Feder (6) in die Freigabestellung belastet und ein durch den Elektromagneten (2) verlagerbares Sperrglied (Anker 7) blockiert die Halteklauen (4) gegen das Verschwenken in die Freigabestellung.

## Beschreibung

Die Erfindung bezieht sich auf eine Kupplung nach dem Oberbegriff des Patentanspruches 1.

Bei einer bekannten derartigen Kupplung (DE 39 30 171 A1) ist am freien Ende der Haltestange ein beidseitig überstehender Querbolzen vorgesehen, der von zwei Sperrklinken hintergriffen wird. Die Sperrklinken werden gegen die Wirkung von Federn jeweils durch ein Kniehebelpaar betätigt, so daß dann beide Teile über eine Langlochführung zusammenwirken. Betätigt wird das Kniehebelpaar über eine Verbindungslasche, die wiederum über eine Langlochführung mit dem Zuganker eines Elektromagneten zusammenarbeitet. Die vorbekannte Bauart ist aufwendig, denn es werden viele Hebel und Gelenkverbindungen verwendet. Da in der Betätigungskette darüber hinaus auch Langlochführungen vorgesehen sind, dürfte ein präziser, zuverlässiger Betrieb nur mit sehr hohem Präzisionsaufwand erreichbar sein.

Der Erfindung liegt die Aufgabe zugrunde, eine Kupplung der vorausgesetzen Bauart bereitzustellen, die mit einfachem Bauaufwand und damit mit geringem Kostenaufwand eine hohe Zuverlässigkeit gewährleistet. Diese Aufgabe wird erfindungsgemäß durch die im Patentanspruch 1 angegebenen Maßnahmen gelöst.

Weitere vorteilhafte Einzelheiten der Erfindung sind Gegenstand von Unteransprüchen.

Die Haltestange ist einfach herstellbar, denn es brauchen nur die weiter unten noch näher erläuterten Vorsprünge zum Eingriff der Halteklauen vorgesehen werden. Die Feder ermöglicht bei richtiger Bemessung und Vorspannung beim sensorgesteuerten Freigeben der Kupplung ein schnelles Öffnen der Halteklauen. Es wird hierzu nur das vom Elektromagneten betätigte Sperrglied, bei der bevorzugten Ausführungsform der bewegliche Anker des Elektromagneten selbst, aus der Bewegungsbahn der Halteklauen so weit verlagert, daß diese nicht mehr blockiert sind.

Die Erfindung und weitere vorteilhafte Einzelheiten der Erfindung, die Gegenstand von Unteransprüchen sind, sind im folgenden anhand eines in der Zeichnung dargestellten Ausführungsbeispiels näher erläutert. Es zeigt
- Fig. 1: die Kupplung im geschlossenen, verriegelten Zustand und
- Fig. 2: die Kupplung nach Fig. 1 nach dem Entriegeln.

Die in der Zeichnung dargestellte Kupplung dient zum Verriegeln eines Überrollbügels in der eingefahrenen Position und ermöglicht es, gesteuert durch einen Sensor den Überrollbügel dann freizugeben, wenn der Sensor einen Überschlag oder eine ähnliche vergleichbare Unfall-Situation detektiert. Bei gelöster Kupplung wird der Überrollbügel aus seiner Ruhelage durch einen geeigneten Antrieb, beispielsweise durch vorgespannte Federn, aber auch pyrotechnisch oder hydraulisch usw. in die aufgerichtete Wirkstellung verlagert.

Bei dem bevorzugten Anwendungsfall ist die Haltestange 1 fest mit einem (nicht dargestellten) Überrollbügel verbunden, wogegen der Elektromagnet 2 und die Lagerbolzen 3 für die schwenkbaren Halteklauen 4 am Fahrzeugaufbau oder an einem daran befestigten Gehäuse angeordnet sind.

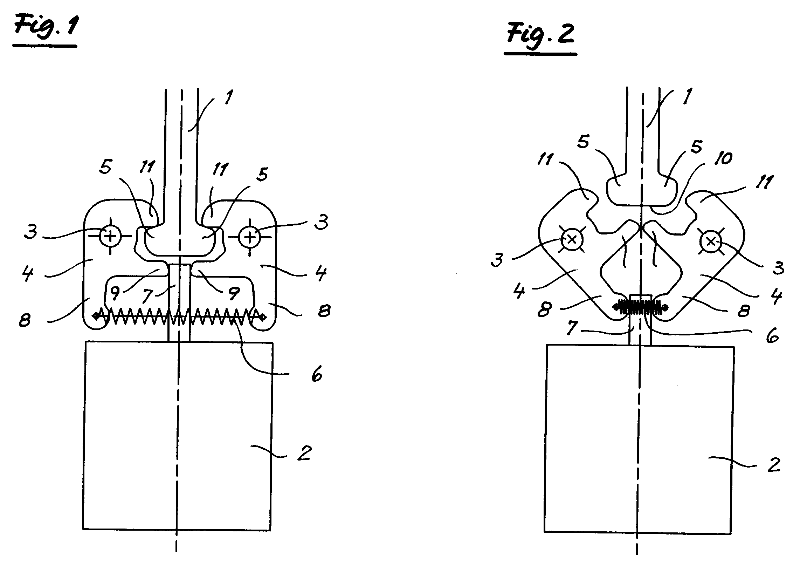

Im verriegelten Zustand (Fig. 1) greifen die Halteklauen 4 hinter jeweils einen Vorsprung 5 der Verriegelungsstange 1.

Die Halteklauen 4 sind unter der Wirkung einer Feder 6 in die Freigabestellung belastet. An der selbsttätigen Bewegung in die Freigabestellung (Fig. 2) sind sie durch ein von dem Elektromagneten verlagerbares Sperrglied gehindert, das die Halteklauen 4 gegen das Verschwenken in die Freigabestellung blockiert. Das Sperrglied ist bei dem dargestellten Ausführungsbeispiel durch den axial verlagerbaren Anker 7 des Elektromagneten 2 gebildet.

Bei dem bevorzugten Ausführungsbeispiel sind zwei einander gegenüberliegende Halteklauen 4 vorgesehen, die durch eine gemeinsame Zugfeder 6 in die Freigabestellung belastet werden. Dies kann in der Weise erfolgen, daß die Zugfeder 6 an jeweils einem zum Elektromagneten 2 gerichteten Hebelarm 8 jeder Halteklaue angreift.

Der schon erwähnte Vorsprung 5, der zum Eingriff der Halteklauen 4 an der Haltestange 1 vorgesehen ist, kann besonders einfach durch eine Verbreiterung am freien Ende der Haltestange 1 gebildet sein. Weiterhin ist an jeder Halteklaue 4 ein Abstütznocken 9 vorgesehen, über den die Haltestange 1 mit ihrer Stirnseite 10 die Halteklaue 4 in Verriegelungsstellung verschwenkt, wenn die Haltestange 1 aus der in Fig. 2 ersichtlichen Position nach unten verlagert wird.

In der in Fig. 1 ersichtlichen Verriegelungsstellung der Kupplung stützen sich die Abstütznocken 9 radial gegen das freie Ende des Ankers 7 des Elektromagneten 2 ab. Der Anker 7 wird hierzu so weit in seine obere Extremstellung verlagert, daß sein freies Ende etwa in Höhe der Abstütznocken 9 liegt. Wie man erkennt, verlaufen die Abstütznocken 9 jeweils etwa rechtwinkelig zu den Hebelarmen 8, an denen die Zugfeder 6 angreift. In Entriegelungsstellung (Fig. 2) liegen die Halteklauen 4 über die Hebelarme 8 am zurückgezogenen Anker 7 des Elektromagneten 2 an. Der bewegliche Anker 7 des Elektromagneten 2 hat demnach zwei Funktionen: In der hochgefahrenen Position das Blockieren der Halteklauen 4 in der Verriegelungsstellung, in der nach unten gefahrenen Position das Festlegen der Halteklauen in einer definierten Freigabe-Position. Letzteres ist ebenfalls wichtig, um eine kontrollierte Bewegung der Halteklauen 4 beim manuellen Einschieben des Überrollbügels über die Haltestange 1 zu gewährleisten. Wenn dabei die Halteklauen 4 zumindest in die aus Fig. 1 ersichtliche Position geschwenkt sind, wird der Anker 7 des Elektromagneten zwischen die freien Enden der Abstütznocken 9 gefahren.

Wie aus der Zeichnung ersichtlich, weist jede Halteklaue 4 etwa parallel zum Abstütznocken 9 einen Verriegelungsnocken 11 zum Eingriff hinter den Vorsprung 5 der Haltestange 1 auf. Eine besonders einfache Bauart der gesamten Kupplung ergibt sich, wenn sowohl die Haltestange 1 als auch die Halteklauen 4 aus Flachmaterial bestehen. Sie können dann besonders einfach, beispielsweise durch Stanzen, hergestellt werden.

Neben dem sensorgesteuerten Entriegeln der Kupplung ist es natürlich auch möglich, willkürlich gesteuert, etwa durch einen Druckknopf, den Anker 7 des Elektromagneten 2 so weit nach unten zu bewegen, daß die Haltestange 1 und damit auch der Überrollbügel nach oben bewegt werden können.

## Patentansprüche

1. Kupplung für ein aus einer Ruhestellung durch einen Antrieb in eine Wartestellung verlagerbares Sicherheitsteil eines Fahrzeuges, insbesondere für einen Überrollbügel, mit einer am Sicherheitsteil angeordneten Haltestange, an der wenigstens ein Vorsprung zum Eingriff von am Fahrzeugaufbau schwenkbar gelagerten Halteklauen vorgesehen ist, welche über einen sensorgesteuerten Elektromagneten aus einer Verriegelungsstellung von dem Vorsprung weg in eine Freigabestellung schwenkbar sind,
dadurch gekennzeichnet, daß die Halteklauen (4) unter der Wirkung einer Feder (6) in die Freigabestellung belastet sind, wobei ein durch den Elektromagneten (2) verlagerbares Sperrglied (Anker 7) die Halteklauen (4) gegen das Verschwenken in die Freigabestellung blockiert.

2. Kupplung nach Anspruch 1,
dadurch gekennzeichnet, daß das Sperrglied durch den axial verlagerbaren Anker (7) des Elektromagneten (2) gebildet ist.

3. Kupplung nach Anspruch 1,
dadurch gekennzeichnet, daß zwei einander gegenüberliegende Halteklauen (4) vorgesehen sind, die durch eine gemeinsame Zugfeder (6) in die Freigabestellung belastet werden.

4. Kupplung nach Anspruch 3,
dadurch gekennzeichnet, daß die Zugfeder (6) an jeweils einen zum Elektromagneten hin gerichteten Hebelarm (8) angreift.

5. Kupplung nach Anspruch 1,
dadurch gekennzeichnet, daß der zum Eingriff der Halteklauen an der Haltestange vorgesehene Vorsprung (5) durch eine Verbreiterung am freien Ende der Haltestange (1) gebildet ist.

6. Kupplung nach Anspruch 1,
dadurch gekennzeichnet, daß an jeder Halteklaue (4) ein Abstütznocken (9) vorgesehen ist, über den die Haltestange (1) mit ihrer Stirnseite (10) die Halteklaue (4) in Verriegelungsstellung verschwenkt.

7. Kupplung nach Anspruch 2 und 6,
dadurch gekennzeichnet, daß sich die Abstütznocken (9) in Verriegelungsstellung radial gegen das freie Ende des Ankers (7) des Elektromagneten (2) abstützen.

8. Kupplung nach Anspruch 4 und 7,
dadurch gekennzeichnet, daß die Abstütznocken (9) jeweils etwa rechtwinkelig zu den Hebelarmen (8) verlaufen, an denen die Zugfeder (6) angreift.

9. Kupplung nach Anspruch 8,
dadurch gekennzeichnet, daß die Halteklauen (4) in Entriegelungsstellung über die Hebelarme (8) am zurückgezogenen Anker (7) des Elektromagneten (2) anliegen.

10. Kupplung nach Anspruch 8,
dadurch gekennzeichnet, daß jede Halteklaue (4) etwa parallel zum Abstütznocken (9) einen Verriegelungsnocken (11) zum Eingriff hinter den Vorsprung (5) der Haltestange (1) aufweist.

11. Kupplung nach Anspruch 1,
dadurch gekennzeichnet, daß die Haltestange (1) und die Halteklauen (4) aus Flachmaterial bestehen.
